(19) Europäisches Patentamt
European Patent Office
Office européen des brevets

(11) **EP 3 024 619 B1**

(12) **FASCICULE DE BREVET EUROPEEN**

(45) Date de publication et mention
de la délivrance du brevet:
**13.03.2019 Bulletin 2019/11**

(21) Numéro de dépôt: **14748238.4**

(22) Date de dépôt: **26.06.2014**

(51) Int Cl.:
**B24B 13/04** *(2006.01)* **B24B 47/22** *(2006.01)*
**B24B 9/14** *(2006.01)*

(86) Numéro de dépôt international:
**PCT/FR2014/051635**

(87) Numéro de publication internationale:
**WO 2015/011356 (29.01.2015 Gazette 2015/04)**

(54) **PROCÉDÉ ET MACHINE DE GRAVURE DE LENTILLES OPTIQUES**

VERFAHREN UND VORRICHTUNG ZUR ÄTZUNG VON KONTAKTLINSEN

METHOD AND MACHINE FOR ETCHING OPTICAL LENSES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2013 FR 1357427**

(43) Date de publication de la demande:
**01.06.2016 Bulletin 2016/22**

(73) Titulaire: **Essilor International
94220 Charenton-le-Pont (FR)**

(72) Inventeur: **LEMAIRE, Cédric
F-94220 Charenton-le-Pont (FR)**

(74) Mandataire: **Jacobacci Coralis Harle
32, rue de l'Arcade
75008 Paris (FR)**

(56) Documents cités:
**EP-A1- 1 864 753 EP-A1- 1 916 060
EP-A1- 2 306 236 WO-A1-2007/141402**

EP 3 024 619 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne de manière générale la fabrication de lentilles optiques.

Elle concerne plus particulièrement un procédé d'usinage d'une lentille optique par une machine de détourage, comportant :

- une étape de blocage de ladite lentille optique sur des moyens de blocage de ladite machine de détourage,
- une étape d'acquisition de caractéristiques géométriques relatives à la forme de l'une au moins des faces optiques de la lentille optique,
- une étape d'élaboration d'une consigne de détourage de la lentille optique en fonction des caractéristiques géométriques acquises, et
- une étape de détourage de la lentille optique le long d'un contour souhaité, au cours de laquelle un outil de détourage de la machine de détourage est piloté relativement auxdits moyens de blocage selon ladite consigne de détourage.

L'invention trouve une application particulièrement avantageuse dans la réalisation de gravures décoratives (des motifs tels que des étoiles, des animaux, ...) ou techniques (des motifs tels que la date de remplacement à prévoir pour la lentille optique, les coordonnées du propriétaire des lunettes, le numéro de série de la lentille optique, ...).

Elle concerne également une machine de détourage d'une lentille optique comprenant :

- des moyens de blocage de la lentille optique,
- un premier moyen d'acquisition de caractéristiques géométriques relatives à la forme de l'une au moins des faces optiques de la lentille optique bloquée dans lesdits moyens de blocage,
- un second moyen d'acquisition d'une consigne de détourage de la lentille optique,
- un outil de détourage adapté à détourer la lentille optique, et
- un moyen de pilotage adapté à piloter ledit outil de détourage relativement auxdits moyens de blocage selon ladite consigne de détourage Une machine et un procédé pour détourer une lentille optique sont connus e.g. du document WO 2007/141402.

Le processus de fabrication des lentilles optiques, et singulièrement des lentilles ophtalmiques correctrices, nécessite un soin et une précision particulièrement élevés. Il comporte généralement quatre étapes principales. Dans un premier temps, une lentille semifinie, appelée aussi ébauche galette ou préforme, est obtenue par moulage de la matière synthétique ou minérale qui a été choisie pour constituer le substrat de base de la lentille. Dans un second temps, la lentille semi-finie venue de moulage est surfacée sur l'une et/ou l'autre de ses deux faces optiques pour satisfaire au modèle géométrique et à la correction prescrits. Dans un troisième temps, cette lentille finie reçoit différents traitements, par exemple hydrophobe, anti-rayure, antireflet, ... Enfin, dans un quatrième temps, la lentille est détourée et finalisée, de manière à pouvoir être fixée sur la monture de lunettes sélectionnée.

Du fait des fortes exigences de précision, ces opérations sont découpées en plusieurs sous-étapes associées à autant de postes de travail spécifiques.

Lors de la quatrième opération, le détourage est ainsi effectué sur une machine de détourage distincte des machines utilisées au cours des opérations précédentes.

Ce détourage peut être précédé ou suivi d'une étape de gravure de la lentille afin d'y inscrire des marquages particuliers. On utilise généralement pour cela une machine de gravure spécifique, distincte de ladite machine de détourage.

Il est ainsi connu d'utiliser une machine de micro-percussion ou encore une machine exploitant un laser pour réaliser des gravures sur la tranche ou sur l'une des faces optiques de la lentille optique. Une telle machine est très onéreuse, de sorte que la réalisation d'une telle gravure présente généralement un coût élevé.

Seul un laboratoire spécialisé dispose en outre généralement d'une telle machine, si bien qu'il est nécessaire d'y envoyer la lentille finie, ce qui prolonge les délais de fabrication de la lentille.

OBJET DE L'INVENTION

Afin de remédier aux inconvénients précités de l'état de la technique, la présente invention propose un nouveau procédé et une nouvelle machine permettant de réaliser de telles gravures à moindre coût, dans un délai très réduit.

Plus particulièrement, on propose selon l'invention un procédé tel que défini dans l'introduction, dans lequel il est prévu :

- une étape d'élaboration d'une consigne de gravure de ladite face optique de la lentille optique en fonction des caractéristiques géométriques acquises, et
- une étape de gravure de ladite face optique de la lentille optique le long d'une ligne située à l'intérieur dudit contour souhaité, au cours de laquelle un outil de gravure pointu de ladite machine de détourage est piloté relativement auxdits moyens de blocage selon ladite consigne de gravure de telle manière que sa pointe glisse continûment contre ladite face optique pour la rayer le long de ladite ligne.

Ainsi, grâce à l'invention, l'outil de gravure est directement monté sur la machine de détourage. Les différentes mobilités permettant de piloter cet outil contre la lentille peuvent alors être obtenues en utilisant les mobilités préexistantes de la machine de détourage. Le coût de gravure de la lentille s'en trouve alors fortement réduit.

L'utilisation de la machine de détourage pour graver la lentille permet en outre d'éviter à un opticien de devoir envoyer la lentille à un laboratoire spécialisé, ce qui réduit le temps de fabrication de la lentille. Elle offre en outre une plus grande latitude à l'opticien lorsqu'il souhaite adapter ou modifier le motif de la gravure, puisqu'il peut interagir en temps réel avec la machine de détourage.

D'autres caractéristiques avantageuses et non limitatives du procédé conforme à l'invention sont les suivantes :

- lors de l'étape de gravure, ledit outil de gravure est piloté relativement auxdits moyens de blocage de telle manière qu'il génère sur ladite face optique une rayure présentant une largeur et une profondeur comprises entre 0,005 et 0,5 millimètre ;
- ladite pointe présentant un axe de révolution, au départ de l'étape de gravure, ledit outil de gravure est piloté relativement auxdits moyens de blocage de telle manière que ledit axe de révolution se place orthogonalement au plan qui est tangent à ladite face optique et qui passe par le point de contact initial entre ladite pointe et ladite face optique ;
- ladite pointe présentant un axe de révolution, lors de l'étape de gravure, ledit outil de gravure est piloté relativement auxdits moyens de blocage de telle manière que ledit axe de révolution demeure globalement orthogonal (à 10 degrés près) au plan qui est tangent à ladite face optique et qui passe par le point de contact entre ladite pointe et ladite face optique ;

- ladite machine de détourage comportant un châssis par rapport auquel lesdits moyens de blocage sont montés pivotant suivant une première mobilité de pivotement et par rapport auquel un bras de finition est monté pivotant suivant deux autres mobilités de pivotement, le bras de finition portant ledit outil de gravure, lors de l'étape de gravure, ledit outil de gravure est maintenu fixe en rotation par rapport audit bras de finition ;
- ledit outil de gravure étant équipé d'une jauge de contrainte adaptée à mesurer un effort relatif à la force exercée par l'outil de gravure sur la lentille optique, lors de l'étape de gravure, on acquiert ledit effort et on pilote ledit outil de gravure relativement auxdits moyens de blocage en fonction de l'effort acquis ;
- ledit outil de gravure comportant, d'une part, un fourreau dans lequel un support de ladite pointe est monté mobile en translation, et, d'autre part, un moyen de rappel dudit support en position déployée hors du fourreau, lors de l'étape de gravure, on pilote ledit outil de gravure relativement auxdits moyens de blocage de telle manière que ladite pointe s'enfonce théoriquement dans la lentille optique d'une profondeur de consigne déterminée en fonction au moins du matériau de la lentille optique ;
- lors de l'étape d'élaboration de la consigne de gravure, il est prévu une opération d'acquisition de la forme et de la position d'au moins une zone d'interférence, cette zone d'interférence comprenant au moins la zone de contact entre ladite face optique et lesdits moyens de blocage, et une opération de repérage à l'intérieur du contour souhaité d'au moins une zone propice dans laquelle la ligne peut être gravée, compte tenu de la forme et de la position de chaque zone d'interférence ;
- lors de l'étape d'élaboration de la consigne de gravure, il est prévu une opération automatique de positionnement de ladite ligne à l'intérieur de ladite zone propice ;
- lors de l'étape d'élaboration de la consigne de gravure, il est prévu une opération manuelle de positionnement de ladite ligne à l'intérieur du contour souhaité ;
- ladite face optique de la lentille optique présentant un revêtement de surface, ladite ligne est située dans une zone temporale ou nasale de ladite face optique et forme une portion de surface dépourvue de revêtement ;
- il est prévu une étape ultérieure de coloriage de la rayure obtenue, au cours de laquelle un marqueur de ladite machine de détourage est piloté relativement auxdits moyens de blocage de telle manière qu'il glisse à l'intérieur de ladite rayure ; et
- ladite ligne forme un code de traçabilité de la lentille optique.

L'invention propose également une machine de détourage telle que définie en introduction, dans laquelle il est prévu un outil de gravure qui comprend une pointe abrasive adaptée à rayer ladite face optique de ladite lentille optique, dans laquelle ledit second moyen d'acquisition est adapté à acquérir une consigne de gravure de ladite face optique de la lentille optique, et dans laquelle ledit moyen de pilotage est adapté à piloter ledit outil de gravure relativement auxdits moyens de blocage selon ladite consigne de gravure de telle manière que ladite pointe glisse contre ladite face optique pour la rayer.

D'autres caractéristiques avantageuses et non limitatives de la machine de détourage conforme à l'invention sont les suivantes :

- ledit outil de gravure comprend un support non abrasif à l'extrémité duquel est fixée ladite pointe, qui est réalisé dans un matériau différent du matériau de ladite pointe, et ladite pointe s'étend sur une longueur inférieure à 5 millimètres ;
- il est prévu un châssis par rapport auquel lesdits moyens de blocage sont montés pivotant suivant une première mobilité de pivotement et par rapport auquel un bras de finition est monté pivotant suivant deux autres mobilités de pivotement, et le bras de finition porte ledit outil de gravure ;

- le bras de finition porte au moins un autre outil compris dans la liste suivante : une meulette de polissage, une meulette de chanfreinage, un fraise, un foret de perçage ;
- le support de l'outil de gravure est monté fixe en rotation sur le bras de finition ;
- le bras de finition porte un mandrin rotatif pour foret de perçage et le support de l'outil de gravure présente une partie de préhension montée de manière amovible dans ledit mandrin rotatif ;
- le premier moyen d'acquisition comporte au moins un palpeur qui est adapté à venir au contact de ladite face optique de la lentille optique, qui est monté à translation suivant une autre mobilité de translation par rapport audit châssis, et qui porte un marqueur ;
- le premier moyen d'acquisition comporte au moins un palpeur qui est adapté à venir au contact de ladite face optique de la lentille optique, qui est monté à translation suivant une autre mobilité de translation par rapport audit châssis, et qui porte ledit outil de gravure ;
- ledit outil de gravure est équipé d'une jauge de contrainte adaptée à mesurer un effort relatif à la force exercée par l'outil de gravure sur la lentille optique ;
- le support de l'outil de gravure est monté mobile en translation dans un fourreau et il est prévu un moyen de rappel dudit support en position déployée hors du fourreau.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique en perspective d'une machine de détourage selon l'invention, comportant notamment un bras de finition ;
- la figure 2 est une vue de détail du bras de finition de la figure 1, embarquant un outil de gravure ;
- la figure 3 est une vue de détail d'une variante de réalisation du bras de finition de la figure 2 ;
- la figure 4 est une vue en coupe de l'outil de gravure de la figure 2 ;
- la figure 5 est un graphique illustrant les variations de l'effort appliqué sur le ressort de l'outil de gravure de la figure 2, en fonction du déplacement imposé à ce ressort ;
- la figure 6 est une vue schématique des palpeurs de la machine de détourage de la figure 1 ;
- la figure 7 est une vue illustrant les zones d'une lentille ophtalmique dans lesquelles aucune gravure ne doit être usinée ;
- les figures 8 à 12 sont des vues de face de lentilles ophtalmiques présentant différents motifs de gravure.

Une opération récurrente, lors de la fabrication de lentilles optiques, consiste à graver des motifs sur ces lentilles. Il peut s'agir de motifs esthétiques ou de motifs techniques.

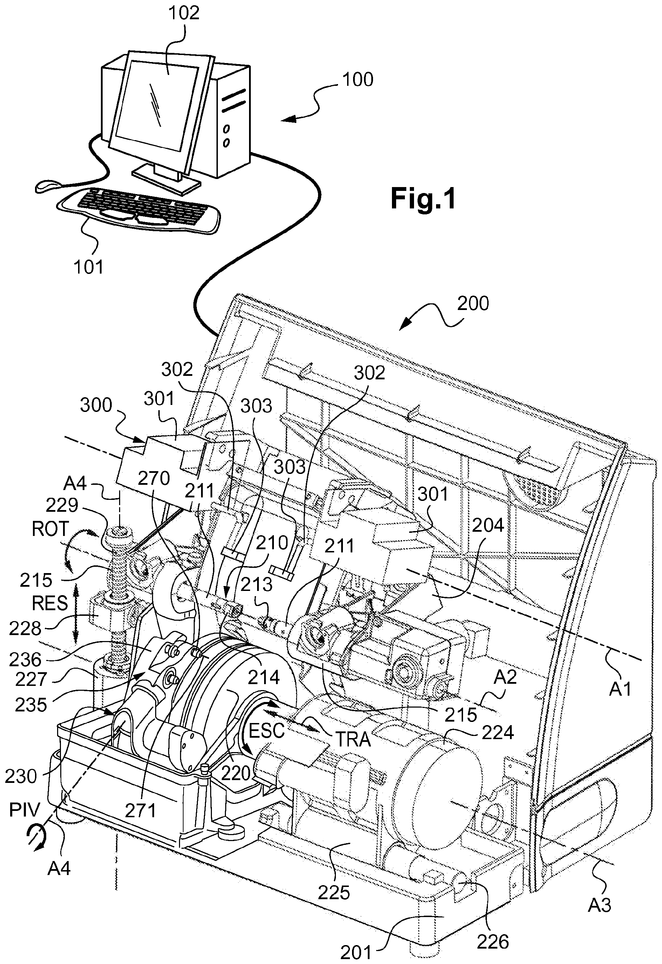

Sur la figure 1, on a représenté un dispositif de détourage adapté à mettre en oeuvre cette opération de gravure sur tout type de lentilles optiques (lentille d'objectif, lentilles solaires, ...), notamment sur des lentilles ophtalmiques.

Un tel dispositif de détourage se trouve généralement dans le laboratoire d'un opticien, afin de lui permettre de monter une paire de lentilles ophtalmiques sur une monture sélectionnée par un futur porteur.

Ce montage se décompose en quatre opérations principales :

- l'acquisition d'un contour souhaité selon lequel devra être détourée chaque lentille ophtalmique ;
- le centrage du contour souhaité dans le référentiel de la lentille correspondante, qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue ;
- le blocage de chaque lentille qui consiste à fixer sur chaque lentille un accessoire de blocage permettant au dispositif d'usinage de saisir la lentille et de mémoriser la position du référentiel de cette lentille ; et
- le détourage de chaque lentille qui consiste à l'usiner ou à la découper selon le contour souhaité, compte tenu des paramètres de centrage définis.

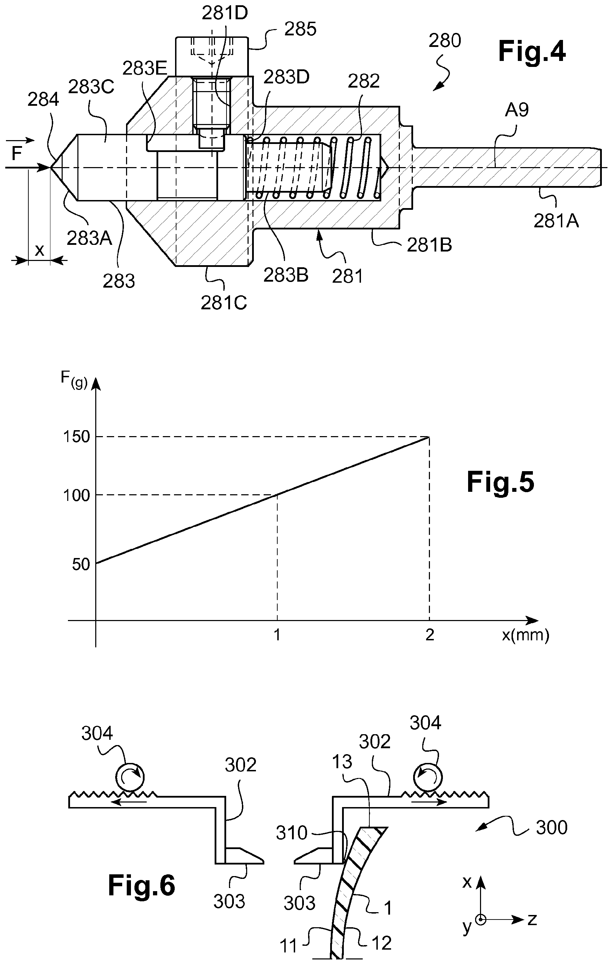

Sur la figure 6, on a représenté en coupe une partie d'une lentille ophtalmique 1 à détourer.

Une telle lentille ophtalmique 1 présente deux faces optiques avant 11 et arrière 12, et une tranche 13 initialement circulaire qu'il convient de ramener à la forme du contour souhaité, de manière que la lentille ophtalmique 1 puisse ensuite être fixée à la monture de lunettes sélectionnée.

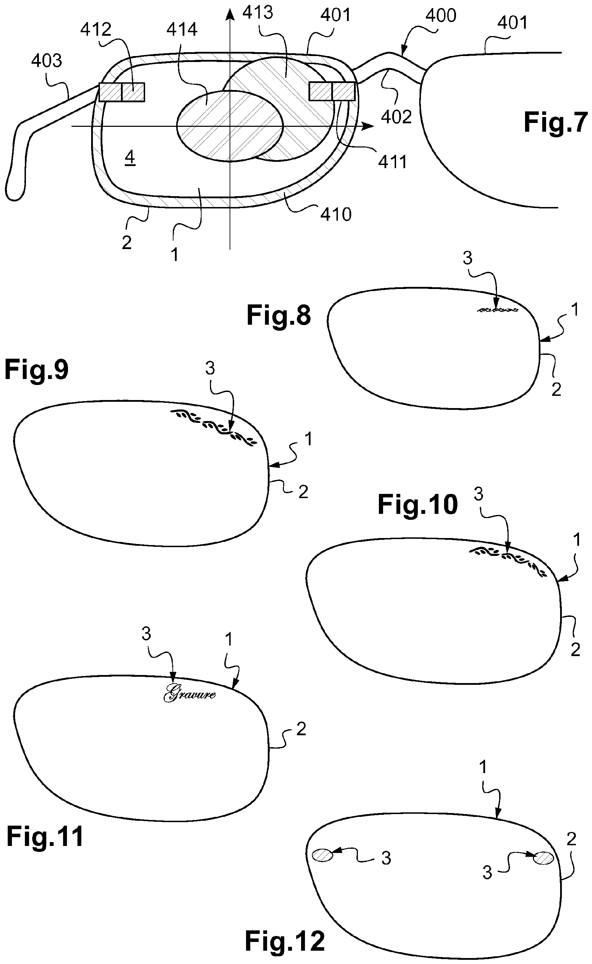

Sur la figure 8, on a représenté un exemple particulier de forme de contour souhaité 2.

Une telle lentille ophtalmique 1 pourra comporter un substrat en tout type de matière, par exemple organique, polycarbonate, Trivex®, Tribrid®... Son substrat sera préférentiellement recouvert d'un revêtement de surface, par exemple antireflet, antibuée, ...

Le point de la lentille ophtalmique où l'effet loupe est nul (c'est-à-dire, dans le cas d'une lentille ayant une puissance optique exclusivement sphérique, le point où le rayon incident et le rayon transmis ont même axe) est appelé centre optique.

Dans le cas d'une lentille à variation progressive de puissance (appelée « lentille progressive »), on pourra également définir un point de vision de près (situé dans la partie inférieure de la lentille ophtalmique 1) et un point de vision de loin (situé dans la partie supérieure de la lentille ophtalmique 1).

Machine de détourage

Pour détourer cette lentille ophtalmique 1, on la place dans la machine de détourage 200 connue en elle-même et décrite en détail dans le document WO2008/043910.

Une telle machine, telle qu'illustrée sur la figure 1, est une meuleuse 200 qui comporte :

- un châssis 201 fixé sur un plan de travail (non représenté),
- des moyens de blocage 210 de la lentille ophtalmique 1 ;
- un train de meules 220 de grands diamètres ;
- un bras de finition 235 qui embarque plusieurs outils de finition ;
- un moyen d'acquisition 300 de caractéristiques géométriques $x_i$, $y_i$, $z_i$ relatives à la forme de l'une au moins des faces optiques 11 de la lentille ophtalmique 1 ; et
- un dispositif de calcul et de pilotage (appelé calculateur 100), permettant de piloter les différents organes de la meuleuse 200.

Le train de meules 220 comporte plusieurs meules montées sur un arbre commun assurant leur entraînement en rotation autour d'un axe de meule A3, en pratique un axe horizontal. Cet arbre commun, qui n'est pas visible sur les figures, est commandé en rotation par un moteur électrique 224 piloté par le calculateur 100.

Le train de meules 220 comporte notamment une grande meule d'ébauche cylindrique et une grande meule de biseautage présentant une gorge de biseautage. Il comporte également deux grandes meules de polissage de formes correspondantes à celles de meules d'ébauche et de biseautage, mais de grains différents.

Ce train de meules est monté mobile en translation sur le châssis 201 suivant un axe parallèle à l'axe de meule A3. En l'espèce, l'ensemble du train de meules, de son arbre et de son moteur est porté par un chariot 225 qui est lui-même monté sur des glissières 226 solidaires du châssis 3 et qui est actionnée par un moteur électrique. On parle de mobilité de transfert TRA.

Les moyens de blocage 210 de la lentille ophtalmique 1 comportent ici plus précisément deux arbres 211 de serrage et d'entraînement en rotation de la lentille ophtalmique 1 à détourer. Ces deux arbres 211 sont alignés l'un avec l'autre suivant un axe de blocage A2 parallèle à l'axe de meule A3.

Chacun de ces arbres 211 possède une extrémité libre qui fait face à l'autre, dont l'une est équipée d'un nez de blocage 214 de la lentille ophtalmique 1 et dont l'autre est équipée d'un moyen de réception 213 d'un accessoire de blocage de la lentille (prépositionné sur la lentille au moment de son blocage).

Cet accessoire de blocage est classiquement positionné sur la lentille ophtalmique en un point donné et avec une orientation donnée, qui permet de repérer la position du référentiel de la lentille ophtalmique par rapport au référentiel du châssis 201 de la meuleuse 200.

Les deux arbres 211 sont entraînés en rotation autour de l'axe de blocage A2 par des moteurs 215 synchronisés. Ils peuvent faire pivoter la lentille ophtalmique 1 sur une révolution complète (360 degrés). On parle de mobilité de rotation ROT.

En variante, on pourrait prévoir d'équiper un seul des deux arbres d'un moteur, l'autre arbre étant alors monté libre en rotation pour suivre la rotation du premier arbre.

Encore en variante, on pourrait prévoir un seul moteur monté de manière à pouvoir entraîner en rotation, au moyen d'engrenages ou de courroies, les deux arbres.

Ici, un premier des deux arbres 211 est fixe en translation suivant l'axe de blocage A2. Le second des deux arbres 211 est au contraire mobile en translation suivant l'axe de blocage A2 pour réaliser le serrage en compression axiale de la lentille ophtalmique 1 entre les deux arbres.

Les deux arbres 211 sont ici portés par une bascule 204 montée pivotante sur le châssis 201, autour d'un axe de bascule A1, en pratique un axe horizontal parallèle à l'axe de blocage A2.

Pour permettre un réglage dynamique de l'entraxe entre l'axe de blocage A2 et l'axe de meule A3, on utilise la capacité de pivotement de la bascule 204 autour de l'axe de bascule A1. Ce pivotement provoque en effet un déplacement, ici sensiblement vertical, de la lentille ophtalmique enserrée entre les arbres 211 qui rapproche ou éloigne la lentille du train de meules 220. On parle de mobilité de restitution RES.

Cette mobilité de restitution RES est mise en oeuvre à l'aide d'un système de vis-écrou. Ce système comporte, d'une part, un moteur de restitution 227 solidaire du châssis 201 qui entraîne en rotation une tige filetée 229 d'axe vertical perpendiculaire à l'axe de bascule A1, et, d'autre part, une noix 228 qui coopère avec cette tige filetée 229 et qui est solidaire de la bascule 204.

Pour l'usinage de la lentille ophtalmique suivant le contour souhaité 2, il suffit, donc, d'une part, de déplacer en conséquence la noix 228 le long de la tige filetée 229, sous le contrôle du moteur de restitution 227, et, d'autre part, de faire pivoter conjointement les arbres de support 211 autour de l'axe de blocage A2.

Le bras de finition 235 est monté sur la charriot 225, si bien qu'il profite de la mobilité de transfert TRA. Il présente en outre deux mobilités de pivotement ESC, PIV par rapport au châssis 201, autour de deux axes transversaux, dont l'un d'entre eux est parallèle à l'axe de blocage A2.

En pratique, le bras de finition 235 est monté pivotant sur un levier 230 qui est lui-même monté pivotant sur le charriot 225.

Le levier 230 est monté pivotant sur le charriot 225 par une première de ses extrémités, autour de l'axe de meule A3. Il présente un débattement autour de l'axe de meule A3 qui est inférieur à 180 degrés. On parle de mobilité d'escamotage ESC.

Sa seconde extrémité, qui est recourbée autour du train de meules 220, présente un logement dans lequel est monté pivotant un axe du bras de finition 235, autour d'un axe de réglage A4 orthogonal à l'axe de meule A3. Le bras de finition 235 peut ainsi pivoter autour de cet axe de réglage A4, avec un débattement qui est inférieur à 180 degrés. On parle de mobilité de pivotement PIV.

Ce bras de finition 235 comprend un boîtier 236 qui s'étend en longueur selon un arc de cercle afin d'épouser la forme du train de meules 220 autour duquel il pivote.

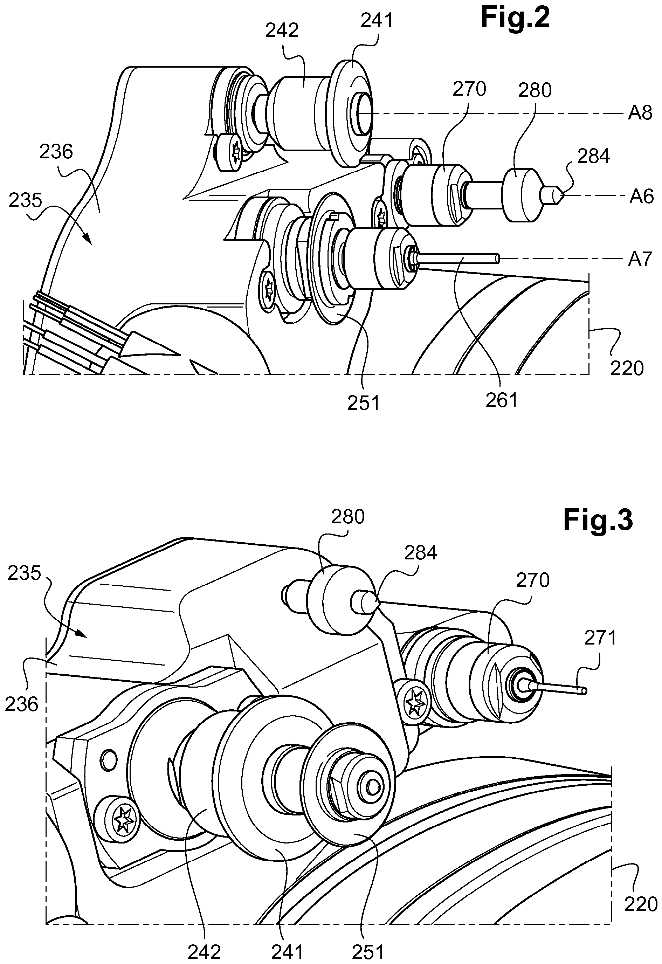

Comme le montre plus particulièrement la figure 2, ce boîtier 236 porte cinq outils répartis en trois groupes de un ou deux outils. Chaque groupe est adapté à tourner autour d'un axe de rotation A6, A7, A8 distinct des axes de rotation des autres groupes d'outils. Ces axes de rotation sont ici parallèles entre eux et orthogonaux à l'axe de réglage A4.

Un premier groupe d'outil, disposé à l'extrémité libre du boîtier 236, comporte un unique outil de perçage. Cet outil de perçage comprend classiquement un foret de perçage 271 de la lentille ophtalmique (visible sur la figure 1 uniquement), un mandrin 270 de maintien du foret de perçage 271, et une bague de serrage du mandrin 270 sur le foret de perçage 271. Le mandrin 270 est adapté à tourner autour d'un axe de rotation A6 orthogonal à l'axe de réglage A4. Suivant l'orientation du bras de finition 235 autour de l'axe de réglage A4, l'axe de rotation A6 de l'outil de perçage peut être parallèle ou incliné par rapport à l'axe de blocage A2 de la lentille ophtalmique. L'orientation du bras de finition 235 permet donc d'incliner le foret de perçage 271 par rapport à la lentille ophtalmique, afin de percer cette dernière selon l'axe désiré.

Un deuxième groupe d'outils comporte un empilement de deux outils distincts, à savoir une meulette de rainage 251 et un outil de fraisage et de détourage 261 de la lentille ophtalmique. Ces deux outils sont adaptés à tourner autour d'un même axe de rotation A7.

Un troisième groupe d'outils comporte également un empilement de deux outils distincts, à savoir une meulette de finition 241 et une meulette de polissage 242. Ces deux outils sont adaptés à tourner autour d'un même axe de rotation A8.

Ces cinq outils sont tous entraînés en rotation par un ensemble moto-réducteur qui comprend un unique moteur électrique logé à l'intérieur du boîtier 236.

Sur la figure 1, le mandrin 270 est équipé d'un foret de perçage 271.

Comme le montre la figure 2, ce mandrin 270 peut également accueillir un outil de gravure 280 spécifique.

Cet outil de gravure 280 est représenté en détail sur la figure 4. Il est prévu pour permettre de graver tout type de motifs sur la face optique avant 11 de la lentille ophtalmique 1.

Son montage sur le bras de finition 235 permet de profiter des mobilités de la meuleuse 200 pour graver la lentille, au bénéfice du coût de la gravure.

L'outil de gravure 280 comporte ici :

- une tige de support 283 allongée selon un axe de gravure A9,
- une pointe de gravure 284 fixée à une première extrémité 283A de la tige de support 283,

- un fourreau 281 à l'intérieur duquel est engagée la tige de support 283 par sa seconde extrémité 283B, de telle manière que la tige de support 283 est libre de coulisser suivant l'axe de gravure A9,
- un moyen de rappel de la tige de support 283 en position déployée (en saillie du fourreau 281), et
- un moyen de butée 285 permettant de limiter le débattement de la tige de support 283 dans le fourreau 281.

La pointe de gravure 284 est réalisée dans un matériau différent de celui de la tige de support 283. Elle peut notamment être réalisée en diamant, en rubis, ou en carbure revêtu. Elle présente en outre une forme lui conférant un pouvoir abrasif, au contraire de la tige de support 283 qui est très sensiblement moins dure.

Cette pointe de gravure 284 présente ici une forme conique de révolution autour d'un axe de gravure A9, avec un angle au sommet compris entre 90 et 110 degrés, ici égal à 100 degrés. Le sommet de cette pointe de gravure 284 est particulièrement pointu puisqu'il présente un rayon de courbure de 0,03 mm. La hauteur de cette pointe de gravure 284 est inférieure à 5 mm. Elle est ici égale à 1 mm. Le diamètre à la base de cette pointe de gravure 284 est quant à lui de 1,2 mm.

La tige de support 283 présente une partie centrale 283C globalement cylindrique de révolution autour de l'axe de gravure A9. Sa première extrémité 283A est tronconique de révolution autour de l'axe de gravure A9, de manière à prolonger continûment la pointe de gravure 284 qu'elle porte. Sa seconde extrémité 283B est cylindrique de révolution autour de l'axe de gravure A9, avec un diamètre réduit par rapport à celui de la partie centrale 283C, ce qui délimite un épaulement 283D.

Le fourreau 281 comporte un corps tubulaire 281B de révolution autour de l'axe de gravure A9, qui délimite intérieurement un logement d'accueil de la tige de support 283. Ce logement d'accueil est ouvert d'un côté pour permettre à la tige de support 283 d'émerger de celui-ci. Il est en revanche fermé du côté opposé.

Le corps tubulaire 281B se prolonge, du côté de son extrémité fermée, par une tige de préhension 281A de moindre diamètre, qui peut être engagée et serrée dans le mandrin 270.

Le corps tubulaire 281B présente extérieurement un élargissement de section 281C dans lequel est prévu un alésage taraudé 281D d'axe radial par rapport à l'axe de gravure A9.

Le moyen de butée est alors formé par une vis 285 qui est vissée dans cet alésage taraudé 281D de telle manière que son extrémité débouche à l'intérieur du logement d'accueil.

Une rainure oblongue 283E est prévue en correspondance, en creux dans la partie centrale 283C de la tige de support 283. Cette rainure oblongue 283E est allongée suivant l'axe de gravure A9, et est prévue pour coulisser le long de l'extrémité de la vis 285. Cette vis 285 permet ainsi de limiter la course de la tige de support 283 entre deux positions extrêmes déployée et enfoncée. Ici, la longueur de cette rainure oblongue 283E est ajustée de telle manière que les deux positions extrêmes déployée et enfoncée sont séparées l'une de l'autre d'une distance comprise entre 1 et 4 mm, ici égale à 2 mm.

Le moyen de rappel de la tige de support 283 en position déployée est ici formé par un ressort de compression 282.

Ce ressort de compression 282 est enfilé sur la seconde extrémité 283B de la tige de support 283, et il s'interpose entre le fond du logement d'accueil prévu dans le fourreau 281 et l'épaulement 283D de la tige de support 283.

Ce ressort de compression 282 est monté précontraint dans le logement d'accueil. Ainsi, comme le montre la figure 5, il faut ici exercer un effort de 50 grammes sur la pointe de gravure 284, selon l'axe de gravure A9, pour commencer à comprimer ce ressort.

Ensuite, la profondeur d'enfoncement p de la tige de support 283 dans le logement d'accueil du fourreau 281 varie linéairement en fonction de l'effort F appliqué axialement sur la pointe de gravure 284.

Il faut alors appliquer un effort axial de 150 grammes sur la pointe de gravure 284 pour que la tige de support 283 atteigne sa position enfoncée.

En variante, comme le montre la figure 3, on pourrait prévoir de fixer l'outil de gravure 280 non pas dans le mandrin de l'un des outils portés par le bras de finition 235, mais au contraire dans le boîtier 236 du bras de finition 235 lui-même. Il pourrait ainsi être vissé dans un alésage taraudé prévu dans ce boîtier 236 ou, comme c'est le cas sur la figure 3, être engagé en force dans un trou borgne prévu dans le boîtier 236.

Cette solution sera préférentiellement utilisée si le bras de finition 235 ne porte des outils rotatifs qu'autour d'un ou deux axes distincts.

Sur cette figure 3, on observe en effet, d'une part, qu'il n'est pas prévu de fraise, et, d'autre part, que les meulettes de finition 241 et de polissage 242 sont montées sur le même axe que la meulette de rainage 251.

Le moyen d'acquisition 300 des caractéristiques géométriques $x_i$, $y_i$, $z_i$ relatives à la forme des faces optiques 11, 12 de la lentille ophtalmique 1 est représenté sur les figures 1 et 6.

Comme le montre bien la figure 6, ce moyen d'acquisition 300 comporte ici deux palpeurs 302 respectivement adaptés à venir au contact des deux faces optiques 11, 12 de la lentille ophtalmique 1.

Les palpeurs 302 sont agencés pour palper indépendamment ou conjointement les deux faces optiques 11, 12 de la lentille ophtalmique 1. A cet effet, ces palpeurs 302 comprennent deux branches en L dont les terminaisons forment des becs de palpage 303 tournés l'un vers l'autre.

Les deux palpeurs 302 sont montés mobiles en translation par rapport au châssis 201 de la meuleuse 200. Cette translation permet d'écarter ou de rapprocher les deux becs de palpage 303 de la lentille ophtalmique 1. Les translations des palpeurs 302 sont commandées indépendamment l'une de l'autre par des moteurs électriques encodeurs 304 qui sont intégrés dans des boîtiers 301 (figure 1) et qui sont pilotés par le calculateur 100. L'entraînement en translation et le suivi permanent de la position des palpeurs 302 par les moteurs électriques encodeurs 304 sont réalisés par l'intermédiaire d'un mécanisme à pignon et crémaillère, chaque pignon étant entraîné par le moteur correspondant et la crémaillère associée étant solidaire des palpeurs 302.

Lors du palpage de la lentille, on considérera ici un repère orthonormé de la meuleuse (X, Y, Z) dont le vecteur d'abscisse X et le vecteur d'ordonnée Y sont orthogonaux à l'axe de blocage A2.

Pour le palpage d'un point $P_i(x_i, y_i)$ de la face optique avant 11 la lentille ophtalmique 1, il suffit d'une part, de déplacer en conséquence la noix 228 le long de la tige filetée 229, sous le contrôle du moteur de restitution 227, et, d'autre part, de faire pivoter conjointement les arbres de support 211 sous le contrôle des moteurs 215. Les mobilités de rotation ROT et de restitution RES permettent en effet de placer le point $P_i$ en face des palpeurs 302. Les moteurs électriques encodeurs 304 permettent alors de rappeler les becs de palpage 303 au contact des deux faces optiques 11, 12 de la lentille ophtalmique 1, et de relever l'altitude $z_i$ du point $P_i$.

Comme le montre bien la figure 6, le palpeur 302 adapté à palper la face optique arrière 12 de la lentille ophtalmique 1 est équipé d'un marqueur 310 qui fait dos au bec de palpage 303 et qui pointe dans une direction opposée à celle de ce bec. Ce marqueur 310 présente une forme identique à celle de la pointe de gravure 284. Il permet ainsi de mettre en valeur les motifs de gravure, en les colorant (ici en couleur noire).

Le calculateur 100 est ici représenté sur la figure 1 sous la forme d'un ordinateur de bureau équipé d'un clavier 101 et d'un écran 102. Typiquement, ce calculateur 100 sera plutôt intégré au système électronique et/ou informatique de la meuleuse 200 et sera connecté à un écran tactile d'affichage et de saisie d'informations.

Pour piloter les différentes mobilités de la meuleuse 200, le calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à acquérir des informations relatives au référentiel de la lentille ophtalmique 1, à la forme et au type de la monture de lunettes sélectionnée, au matériau de la lentille ophtalmique 1, à la forme des motifs de gravure souhaités, ...

Grâce à un logiciel mémorisé dans sa mémoire morte, le calculateur 100 est adapté à élaborer, à partir de ces différentes informations, une consigne de détourage CONS1 de la lentille ophtalmique 1, une consigne de perçage de la lentille ophtalmique 1 si celle-ci est destinée à être montée sur une monture de lunettes du type percé, et une consigne de gravure CONS2 de la face optique avant 11 de la lentille ophtalmique 1.

Enfin, grâce à ses interfaces de sortie, le calculateur 100 est adapté à transmettre ces consignes aux différents moteurs de la meuleuse 200, pour mettre en oeuvre le détourage, le perçage et la gravure de la lentille ophtalmique 1.

## Procédé d'usinage

La partie du procédé de préparation de la lentille ophtalmique 1 qui est mise en oeuvre par la meuleuse 200 se décompose en plusieurs étapes de blocage de la lentille ophtalmique 1, de palpage de la lentille ophtalmique 1, d'élaboration des consignes de détourage CONS1 et de gravure CONS2, de détourage de la lentille ophtalmique 1, puis de gravure de la face optique avant 11 de la lentille ophtalmique 1.

On notera que si l'étape de gravure succède ici à l'étape de détourage, il sera aussi possible de mettre en oeuvre l'étape de gravure avant celle de détourage.

Au cours de la première étape, la lentille ophtalmique 1 équipée de son accessoire de blocage est engagée entre les deux arbres 211 de la meuleuse 200. Ces deux arbres 211 sont ensuite pilotés par le calculateur 100 pour réaliser le serrage en compression axiale de la lentille ophtalmique 1, selon l'axe de blocage A2.

Au cours de la seconde étape, le calculateur 100 pilote la mobilité de restitution RES de la meuleuse 200 de manière à placer la lentille ophtalmique 1 entre les deux palpeurs 302.

Il pilote ensuite les moteurs électriques encodeurs 304 de manière à ce que ces derniers rappellent les becs de palpage 303 au contact des deux faces optiques 11, 12 de la lentille ophtalmique 1.

Puis, le calculateur 100 pilote en combinaison les mobilités de rotation ROT et de restitution RES de la meuleuse 200 de manière à ce que la lentille ophtalmique 1 se déplace entre les deux palpeurs 302, ce qui permet de relever les coordonnées tridimensionnelles $(x_i, y_i, z_i)$ d'une pluralité de points $P_i$ des faces optiques 11, 12 de la lentille ophtalmique 1.

La troisième étape consiste à élaborer les consignes de détourage CONS1 et de gravure CONS2 en fonction notamment des coordonnées tridimensionnelles $(x_i, y_i, z_i)$ acquises.

L'élaboration d'une consigne de détourage CONS1 étant bien connue de l'homme du métier, par exemple du document EP2306236, elle ne sera pas ici décrite.

L'élaboration de la consigne de gravure CONS2, qui fait plus particulièrement l'objet de la présente invention, sera en revanche décrite ici en détail.

Lors de cette étape d'élaboration, la première opération du calculateur 100 consiste à repérer, à l'intérieur du contour souhaité 2, au moins une zone propice 4 dans laquelle le motif de gravure 3 peut être gravé.

Pour cela, comme le montre la figure 7, le calculateur 100 acquiert au moins les deux premiers paramètres de la liste suivante :

- la géométrie du contour souhaité 2,
- la forme et la position relative au contour souhaité 2 de la zone de contact 414 entre la face optique avant 11 et l'accessoire de blocage 210,
- la forme et la position relative au contour souhaité 2 de la zone optiquement utile 413 de la face optique avant 11,
- la forme et la position relative au contour souhaité 2 des zones d'accrochage 411 du pontet 402 et de la branche 403 de la monture de lunettes 400 sélectionnée,
- la forme et la position relative au contour souhaité 2 de la zone d'entourage 410 du cercle 401 de la monture de lunettes 400 sélectionnée.

Le calculateur 100 acquiert ici les trois premiers paramètres précités, ainsi que l'un ou l'autre des deux derniers.

Ces différents paramètres sont ici obtenus de la manière suivante.

La géométrie du contour souhaité 2 est ici reçue d'un appareil de lecture de monture de lunettes (non représenté) qui palpe la forme des drageoirs des cercles 401 de la monture de lunettes 400 sélectionnée (dans le cas d'une monture du type cerclé) ou qui palpe la forme des tranches de verres de présentation (dans le cas d'une monture du type percé ou semi-cerclé), qui en déduit la forme tridimensionnelle que le contour de la lentille ophtalmique 1 doit présenter pour son montage sur la monture de lunettes 400 sélectionnée, et qui transmet cette forme à la meuleuse 200 sous la forme d'un fichier électronique.

La position et la forme de la zone de contact 414 entre la face optique avant 11 et l'accessoire de blocage 210 sont reçues de l'appareil de blocage de la lentille (celui qui pose l'accessoire de blocage sur la lentille), compte tenu de la forme de l'accessoire de blocage 210 choisi et des paramètres de centrage définis.

La zone optiquement utile 413 de la face optique avant 11 correspond à la zone de la lentille que le futur porteur sera fréquemment amené à utiliser lorsqu'il regardera au travers de la lentille ophtalmique 1.

Dans le cas d'une lentille ayant une puissance optique exclusivement sphérique, cette zone optiquement utile 413 pourra être définie comme une zone centrée sur le centre optique de la lentille, qui présente une forme de disque de rayon prédéterminé compris entre 7 et 25 mm, ici égal à 15 mm.

Dans le cas d'une lentille à variation progressive de puissance (appelée « lentille progressive »), cette zone optiquement utile 413 pourra être définie comme une zone ovale dont les foyers sont formés par les points de vision de près et de vision de loin de la lentille, et dont le petit axe présente une valeur prédéterminée comprise entre 7 et 25 mm, ici égale à 15 mm.

Les zones d'accrochage 411, 412 du pontet 402 et de la branche 403 de la monture de lunettes 400 sélectionnée correspondent aux zones dans lesquelles seront réalisés les trous de perçage (dans le cas où la monture de lunettes 400 sélectionnée est du type percé).

Ces zones sont ici carrées, centrées sur les points de perçage de la lentille ophtalmique, et présentent une largeur comprise entre 2 et 12 mm, ici égale à 6 mm. Généralement, puisqu'il est prévu deux trous de perçage pour le montage du pontet et deux autres trous de perçages pour le montage de la branche, les zones présentent par paire des formes de rectangles.

La zone d'entourage 410 du cercle 401 de la monture de lunettes 400 sélectionnée correspond quant à elle à la zone du bord de la lentille ophtalmique 1 qui sera recouverte par la monture de lunettes 100 (dans le cas où la monture est du type cerclé ou semi-cerclé). Cette zone correspond ici à une bande qui longe le contour souhaité 2, et qui présente une largeur comprise entre 1 et 6 mm, ici égale à 3 mm.

Ces zones forment donc des zones d'interférence 410, 411, 412, 413, 414. Une fois ces zones repérées, le calculateur 100 considère la partie restante de la zone intérieure du contour souhaité 2 comme la zone propice 4 dans laquelle le motif de gravure 3 doit être réalisé.

On comprend toutefois que si le motif de gravure est constitué par une référence constructeur que l'on souhaite graver mais qu'on ne souhaite pas laisser visible, on pourra privilégier de graver cette référence dans cette zone d'entourage 410.

Le calculateur 100 acquiert ensuite la forme à graver sur la lentille ophtalmique 1. Cette forme, appelée « motif de gravure 3 », correspond à la forme que la pointe de gravure 284 doit tracer sur la face optique avant 11 de la lentille ophtalmique 1.

La taille de ce motif de gravure 3 est comprise entre 3 mm et 15 mm pour, d'une part, être visible, et, d'autre part, ne pas gêner le futur porteur.

Cette acquisition peut se faire de diverses manières.

Ainsi, on pourra alors prévoir dans la mémoire morte du calculateur 100 une base de données qui mémorise différents motifs de gravure. Alors, le futur porteur pourra choisir sur l'écran 102 le motif de gravure qu'il préfère. Comme le montrent les figures 8 à 10, ce motif de gravure pourra par exemple représenter une branche d'arbre avec des feuilles.

On pourra prévoir de dupliquer ce motif à souhait pour en graver plusieurs sur la lentille ophtalmique 1, par exemple pour former un frise.

En variante, l'opticien peut saisir des caractères sur le clavier 101, de manière à les faire graver sur la lentille ophtalmique 1. Comme le montre la figure 11, ce motif de gravure pourra par exemple constituer un mot ou une référence quelconque.

Il pourra ainsi s'agir d'un code de traçabilité de la lentille ophtalmique, qui pourra être simultanément mémorisé dans une base de données externe. Ce code pourra alors être lu ultérieurement sur la lentille par un opticien de manière à ce que cet opticien puisse retrouver dans cette base de données les différentes caractéristiques de la lentille ophtalmique (sans qu'il ne soit nécessaire de les mesurer).

Encore en variante, le mot ou la référence peut être mémorisé dans la mémoire morte du calculateur 100 en vue d'être systématiquement gravée sur toutes les lentilles ophtalmiques 1 usinée par la meuleuse 200. On pourra ainsi prévoir de graver le nom du magasin d'opticien sur toutes ces lentilles ophtalmiques.

Selon une autre variante, lorsque la monture de lunettes est du type « collé » (c'est-à-dire que les extrémités du pontet 402 et des branches 403 de la monture de lunettes 400 sont prévues pour être collées sur les faces optiques avant 11 des lentilles ophtalmiques 1), l'opticien peut simplement saisir le modèle de la monture de lunettes. On pourra alors prévoir dans la mémoire morte du calculateur 100 une base de données qui mémorise différents motifs de gravure en fonction du modèle saisi.

En effet, si la colle adhère correctement au substrat de la lentille, elle n'adhère en revanche pas à la couche de revêtement. Par conséquent, dans le cas d'une telle monture, il est nécessaire de supprimer localement la couche de revêtement des lentilles pour dégager le substrat de la lentille ophtalmique afin d'y coller la monture de lunettes.

Une fois le modèle de la monture saisi, le calculateur 100 lit dans la base de données les formes des surfaces de collage de la monture de lunettes sur la lentille. De cette manière, l'outil de gravure pourra dégager la couche de revêtement au niveau des zones devant recevoir de la colle (voir figure 12).

Une fois la forme du ou des motifs de gravure 3 acquise, ce motif de gravure 3 est ensuite positionné par rapport au contour souhaité 2.

Cette étape de positionnement peut être effectuée automatiquement par le calculateur 100.

Le calculateur 100 peut ainsi par exemple choisir de placer systématiquement le motif de gravure à l'horizontal, dans la zone située en haut et du côté temporal du contour souhaité, à l'intérieur de la zone propice 4 (voir figure 8).

En variante, la position et la taille du motif de gravure 3 pourront être ajustées manuellement par l'opticien, sous le contrôle du calculateur 100.

Ici, le calculateur 100 aura pour seule fonction d'empêcher l'opticien de positionner le motif de gravure 3 en dehors de la zone propice 4.

L'opticien sera toutefois libre de déplacer, d'incliner, de réduire ou de grossir le motif de gravure 3 (voir figure 9). Il sera également libre de déformer le motif de gravure 3, par exemple pour lui appliquer une transformation de type symétrie ou pour le faire longer le contour souhaité 2 (figure 10). L'opticien sera également libre de choisir la taille et la police d'écriture du motif de gravure 3 (figure 11).

Dans le cas où la monture de lunettes est du type collé (figure 12), l'opticien pourra ajuster au mieux les positions des motifs de gravure 3 relativement au contour souhaité 2 (l'une dans une zone temporale pour le collage de la branche, l'autre dans une zone nasale pour le collage du pontet), de manière qu'une fois collée sur ses deux lentilles ophtalmiques 1, la monture de lunettes s'ajuste au mieux à la morphologie du visage du futur porteur de lunettes.

A l'issue de cette étape de positionnement, le calculateur 100 offre à l'opticien le choix de l'épaisseur du trait à graver (ce qui déterminera l'effort que l'outil de gravure 280 devra appliquer sur la lentille ophtalmique 1). Il pourra ainsi commander l'affichage sur l'écran 102 de trois valeurs de visibilité: faible, normale, et élevée.

Le calculateur 100 met ensuite en oeuvre l'étape de détourage de la lentille ophtalmique 100.

Cette étape est réalisée en trois opérations successives d'ébauche, de finition et de surfinition. L'opération d'ébauche consiste à ramener le contour initial de la lentille à un contour proche ou identique au contour souhaité 2. L'opération de finition consiste à biseauter la tranche de la lentille selon le contour souhaité 2 si celle-ci est destinée à être montée sur une monture de lunettes cerclée, à rainurer la tranche de la lentille selon le contour souhaité 2 si celle-ci est destinée à être montée sur une monture de lunettes semi-cerclée, ou à percer la lentille si celle-ci est destinée à être montée sur une monture de lunettes percée. L'opération de surfinition consiste quant à elle à polir et chanfreiner au besoin les arêtes coupantes de la tranche de la lentille.

Ces opérations sont bien connues de l'homme du métier et ne font pas en propre l'objet de la présente invention. Elles ne seront donc pas ici décrites plus en détail.

Une fois cette étape de détourage achevée, l'opticien retire le foret de perçage 271 du mandrin 270 et le remplace par l'outil de gravure 280.

Le calculateur 100 met ensuite en oeuvre l'étape de gravure du motif de gravure 3 sur la face optique avant 11 de la lentille ophtalmique 1.

Il pilote à cet effet conjointement les mobilités de transfert TRA de restitution RES, et de rotation ROT, selon la consigne de gravure CONS2, de manière que la pointe de gravure 284 glisse continûment contre la face optique avant 11 de la lentille.

Il s'agit bien ici d'un glissement continu en ce sens que l'outil n'est pas prévu pour percuter la lentille en de multiples points pour former un motif, mais il glisse sans interruption pour tracer chaque trait (c'est-à-dire chaque rayure) constituant le motif de gravure 3.

Lors de cette étape de gravure, les mobilités d'escamotage ESC et de pivotement PIV sont pilotées en continu par le calculateur, de telle manière que l'axe de gravure A9 de l'outil de gravure 280 reste orthogonal au plan qui est tangent à la face optique avant 11 de la lentille ophtalmique 1 au niveau du point de contact entre la pointe de gravure 284 et la face optique avant 11.

De cette manière, la pointe de gravure 284 s'enfonce à angle droit dans la lentille ophtalmique 1, ce qui évite que l'un des flancs de la rayure soit plus large que l'autre.

Bien entendu, en variante, on aurait pu prévoir de ne pas piloter les mobilités d'escamotage ESC et de pivotement PIV, de telle manière que l'axe de gravure A9 de l'outil de gravure 280 reste parallèle à l'axe de blocage A2.

On aurait également pu prévoir de ne piloter les mobilités d'escamotage ESC et de pivotement PIV qu'au début de l'opération de gravure, de telle manière que l'axe de gravure A9 se place orthogonalement au plan qui est tangent à la face optique avant 11 de la lentille ophtalmique 1 au niveau du point de contact initial entre la pointe de gravure 284 et la face optique avant 11. Ces mobilités ne seraient ensuite plus pilotées pendant le glissement de la pointe de gravure 284 sur la face optique avant 11. Puisque le motif de gravure 3 présente une dimension réduite, on sait que l'axe A9 restera toutefois sensiblement orthogonal au plan qui est tangent à la face optique avant 11 de la lentille ophtalmique 1 au niveau du point de contact entre la pointe de gravure 284 et la face optique avant 11 (à quelques degrés près, c'est-à-dire à, au maximum, 10 degrés près).

Ici, les différentes mobilités utilisées, et plus particulièrement la mobilité de transfert TRA, sont pilotées de manière que la pointe de gravure 284 exerce sur la face optique avant 11 de la lentille ophtalmique 1 un effort déterminé. De cet effort dépend en effet la profondeur et la largeur de la rayure gravée sur la lentille ophtalmique 1.

En l'espèce, l'outil de gravure 280 est piloté relativement aux bras 211 de telle manière que la rayure présente une largeur et une profondeur comprises entre 0,005 et 0,5 millimètre, préférentiellement comprises entre 0,02 et 0,1 mm.

En pratique, le calculateur 100 pilote les différentes mobilités de telle manière que le ou les rayures constituant le motif de gravure 3 présentent une épaisseur et une profondeur constantes. Il pourra bien entendu en être autrement.

L'ajustement de la profondeur effective p' de la rayure est effectué de la manière suivante.

Le calculateur 100 pilote l'outil de gravure 280 en position non pas de telle manière que la pointe de gravure 284 affleure la face optique avant 11 de la lentille ophtalmique 1, mais plutôt de telle manière qu'elle rentre théoriquement dans la matière de la lentille ophtalmique 100 d'une profondeur de consigne P.

Du fait de cet appui, la tige de support 283 s'enfonce dans le fourreau 281 d'une profondeur d'enfoncement p donnée.

La profondeur de consigne P, la profondeur effective p' de la rayure obtenue et la profondeur d'enfoncement p sont liées par la relation suivante :

$$P = p + p'.$$

Or, on connaît, d'une part, la relation entre la force F exercée sur la lentille et la profondeur effective p' de la rayure (compte tenu du matériau de la lentille), et, d'autre part, la relation entre la profondeur d'enfoncement p et la force F exercée sur la lentille (figure 5). On comprend donc qu'en ajustant la profondeur de consigne P, il est possible d'obtenir une rayure de profondeur effective p' souhaitée.

En pratique, cette étape de gravure pourra être réalisée après le détourage des deux lentilles d'un même job de lentilles (c'est-à-dire après le détourage des deux lentilles à monter sur la monture de lunettes sélectionnée), ce qui évitera à l'opticien de devoir changer plusieurs fois l'outil installé sur le mandrin 270.

Bien entendu, dans la variante de réalisation de la meuleuse représentée sur la figure 3, puisque l'outil de gravure 280 reste à poste, on pourra détourer et graver les deux lentilles du job dans l'ordre que l'on souhaite.

L'ultime étape consiste, si le futur porteur le souhaite, à mettre en valeur le motif de gravure 3 en le colorant.

Comme le montre la figure 6, lors de cette étape, le calculateur 100 pilote les mobilités de rotation ROT et de restitution RES de la meuleuse 200 de manière à placer la lentille ophtalmique 1 à la droite des deux palpeurs 302.

Il pilote ensuite le moteur électrique encodeur 304 du palpeur 302 de droite (celui qui est nativement prévu pour palper la face optique arrière 12 de la lentille) de manière à engager son marqueur 310 dans le motif de gravure 3 et à le rappeler dans cette position.

Puis, le calculateur 100 pilote à nouveau les mobilités de rotation ROT et de restitution RES de la meuleuse 200 de manière à ce que la lentille ophtalmique 1 se déplace contre le marqueur 310, selon la consigne de gravure CONS2, ce qui permet de colorer l'ensemble du motif de gravure 3.

La présente invention n'est nullement limitée au mode de réalisation décrit et représenté, mais l'homme du métier saura y apporter toute variante conforme à son esprit.

Ainsi, on aurait pu prévoir que l'outil de gravure soit monté non pas sur le bras de finition, mais plutôt sur l'un des palpeurs, en lieu et place du marqueur. L'inconvénient de cette solution par rapport à celle exposée supra est qu'elle ne permettra pas d'incliner l'outil de gravure par rapport à la lentille de manière que la pointe de gravure reste orthogonal au plan tangent à la lentille au niveau du point de contact entre la lentille et la pointe de gravure. L'avantage de cette solution est que l'outil de gravure pourra être simplement constitué de la pointe de gravure. En effet, dans cette variante, le moteur qui engrène la crémaillère du palpeur pourra être piloté « en effort », de telle manière que la pointe de gravure exerce l'effort souhaité sur la lentille ophtalmique.

Dans une autre variante de l'invention, on pourrait prévoir que l'outil de gravure comporte simplement une pointe de gravure montée à l'avant d'une jauge de contrainte fixée au bras de finition. Dans cette variante, le pilotage des différentes mobilités de la meuleuse sera alors effectué en fonction de l'effort mesuré par cette jauge de contrainte, de manière que la pointe de gravure exerce l'effort souhaité sur la lentille ophtalmique.

Selon une autre variante de l'invention, on pourrait prévoir de graver la lentille ophtalmique non pas à l'aide d'un outil spécialisé, mais au contraire avec la pointe du foret de perçage ou avec la pointe de la fraise.

Encore en variante, si le calcul de la consigne de gravure est ici effectué par le calculateur de la meuleuse, il pourra bien entendu en variante être effectué par un moyen de calcul extérieur à la meuleuse puis transmis à cette dernière.

Il sera aussi possible de prévoir que la gravure soit effectuée non pas par l'opticien lui-même, mais par le fabricant de lentille, pour autant que ce dernier soit en charge non seulement du moulage et du surfaçage de la lentille mais également du détourage de la lentille. Dans cette variante, la forme du motif de gravure sera choisie par le futur porteur de lunettes chez l'opticien qui sera ensuite chargé de transmettre ce choix au fabricant de lentilles.

**Revendications**

1. Procédé d'usinage d'une lentille optique (1) par une machine de détourage (200), comportant :

    - une étape de blocage de ladite lentille optique (1) entre deux arbres (211) de serrage et d'entraînement en rotation de la lentille optique (1), lesdits deux arbres (211) appartenant à des moyens de blocage (210) de ladite machine de détourage (200),

- une étape d'acquisition de caractéristiques géométriques ($x_i$, $y_i$, $z_i$) relatives à la forme de l'une au moins des faces optiques (11) de la lentille optique (1),

- une étape d'élaboration d'une consigne de détourage (CONS1) de la lentille optique (1) en fonction des caractéristiques géométriques ($x_i$, $y_i$, $z_i$) acquises, et

- une étape de détourage de la lentille optique (1) le long d'un contour souhaité (2), au cours de laquelle un outil de détourage (220) de la machine de détourage (200) est piloté relativement auxdits moyens de blocage (210) selon ladite consigne de détourage (CONS1),

**caractérisé en ce qu'**il comporte en outre :

- une étape d'élaboration d'une consigne de gravure (CONS2) de ladite face optique (11) de la lentille optique (1) en fonction des caractéristiques géométriques ($x_i$, $y_i$, $z_i$) acquises, et

- une étape de gravure de ladite face optique (11) de la lentille optique (1) le long d'une ligne (3) située à l'intérieur dudit contour souhaité (2), au cours de laquelle un outil de gravure (280) pointu de ladite machine de détourage est piloté relativement auxdits moyens de blocage (210) selon ladite consigne de gravure (CONS2) de telle manière que sa pointe (284) glisse continûment contre ladite face optique (11) pour la rayer le long de ladite ligne (3).

2. Procédé d'usinage selon la revendication précédente, dans lequel, lors de l'étape de gravure, ledit outil de gravure (280) est piloté relativement auxdits moyens de blocage (210) de telle manière qu'il génère sur ladite face optique (11) une rayure présentant une largeur et une profondeur comprises entre 0,005 et 0,5 millimètre.

3. Procédé d'usinage selon l'une des revendications précédentes, dans lequel ladite pointe (284) présentant un axe de révolution (A9), au départ de l'étape de gravure, ledit outil de gravure (280) est piloté relativement auxdits moyens de blocage (210) de telle manière que ledit axe de révolution (A9) se place orthogonalement au plan qui est tangent à ladite face optique (11) et qui passe par le point de contact initial entre ladite pointe (284) et ladite face optique (11).

4. Procédé d'usinage selon l'une des revendications précédentes, dans lequel, ladite machine de détourage (200) comportant un châssis (201) par rapport auquel lesdits moyens de blocage (210) sont montés pivotant suivant une première mobilité de pivotement et par rapport auquel un bras de finition (235) est monté pivotant suivant deux autres mobilités de pivotement, le bras de finition (235) portant ledit outil de gravure (280), lors de l'étape de gravure, ledit outil de gravure (280) est maintenu fixe en rotation par rapport audit bras de finition (235).

5. Procédé d'usinage selon l'une des revendications 1 à 4, dans lequel, ledit outil de gravure (280) étant équipé d'une jauge de contrainte adaptée à mesurer un effort relatif à la force exercée par l'outil de gravure (280) sur la lentille optique (1), lors de l'étape de gravure, on acquiert ledit effort et on pilote ledit outil de gravure (280) relativement auxdits moyens de blocage (210) en fonction de l'effort acquis.

6. Procédé d'usinage selon l'une des revendications 1 à 4, dans lequel, ledit outil de gravure (280) comportant, d'une part, un fourreau (281) dans lequel un support (283) de ladite pointe (284) est monté mobile en translation, et, d'autre part, un moyen de rappel dudit support (283) en position déployée hors du fourreau (281), lors de l'étape de gravure, on pilote ledit outil de gravure (280) relativement auxdits moyens de blocage (210) de telle manière que ladite pointe (284) s'enfonce théoriquement dans la lentille optique (1) d'une profondeur de consigne (P) déterminée en fonction au moins du matériau de la lentille optique (1).

7. Procédé d'usinage selon l'une des revendications précédentes, dans lequel, lors de l'étape d'élaboration de la consigne de gravure (CONS2), il est prévu :

- une opération d'acquisition de la forme et de la position d'au moins une zone d'interférence (410, 411, 412, 413, 414), cette zone d'interférence (410, 411, 412, 413, 414) comprenant au moins la zone de contact entre ladite face optique (11) et lesdits moyens de blocage (210), et

- une opération de repérage à l'intérieur du contour souhaité (2) d'au moins une zone propice (4) dans laquelle la ligne (3) peut être gravée, compte tenu de la forme et de la position de chaque zone d'interférence (410, 411, 412, 413, 414).

8. Procédé d'usinage selon la revendication précédente, dans lequel, lors de l'étape d'élaboration de la consigne de gravure (CONS2), il est prévu une opération automatique de positionnement de ladite ligne (3) à l'intérieur de ladite zone propice (4).

9. Procédé d'usinage selon l'une des revendications précédentes, dans lequel, lors de l'étape d'élaboration de la consigne de gravure (CONS2), il est prévu une opération manuelle de positionnement de ladite ligne (3) à l'intérieur du contour souhaité (2).

10. Procédé d'usinage selon l'une des revendications précédentes, dans lequel, ladite face optique (11) de la lentille optique (1) présentant un revêtement de surface, ladite ligne (3) est située dans une zone temporale ou nasale de ladite face optique (11) et forme une portion de surface dépourvue de revêtement.

11. Procédé d'usinage selon l'une des revendications précédentes, dans lequel il est prévu une étape ultérieure de coloriage de la rayure obtenue, au cours de laquelle un marqueur (310) de ladite machine de détourage (200) est piloté relativement auxdits moyens de blocage (210) de telle manière qu'il glisse à l'intérieur de ladite rayure.

12. Procédé d'usinage selon l'une des revendications précédentes, dans lequel ladite ligne (3) forme un code de traçabilité de la lentille optique (1).

13. Machine de détourage (200) d'une lentille optique (1) comprenant :

  - des moyens de blocage (210) de la lentille optique (1) qui comprennent deux arbres (211) de serrage et d'entraînement en rotation de la lentille optique (1),
  - un premier moyen d'acquisition (300) de caractéristiques géométriques $(x_i, y_i, z_i)$ relatives à la forme de l'une au moins des faces optiques (11) de la lentille optique (1) bloquée dans lesdits moyens de blocage (210),
  - un second moyen d'acquisition (100) d'une consigne de détourage (CONS1) de la lentille optique (1),
  - un outil de détourage (220) adapté à détourer la lentille optique (1),
  - un moyen de pilotage (100) adapté à piloter ledit outil de détourage (220) relativement auxdits moyens de blocage (210) selon ladite consigne de détourage (CONS1),

  **caractérisée en ce qu'**il est prévu un outil de gravure (280) qui comprend une pointe (284) abrasive adaptée à rayer ladite face optique (11) de ladite lentille optique (1), **en ce que** ledit second moyen d'acquisition (100) est adapté à acquérir une consigne de gravure (CONS2) de ladite face optique (11) de la lentille optique (1), et **en ce que** ledit moyen de pilotage (100) est adapté à piloter ledit outil de gravure (280) relativement auxdits moyens de blocage (210) selon ladite consigne de gravure (CONS2) de telle manière que ladite pointe (284) glisse contre ladite face optique (11) pour la rayer.

14. Machine de détourage (200) selon la revendication précédente, dans laquelle ledit outil de gravure (280) comprend un support (283) non abrasif à l'extrémité duquel est fixée ladite pointe (284), qui est réalisé dans un matériau différent du matériau de ladite pointe (284), et dans laquelle ladite pointe (284) s'étend sur une longueur inférieure à 5 millimètres.

15. Machine de détourage (200) selon l'une des revendications 13 et 14, qui comporte un châssis (201) par rapport auquel lesdits moyens de blocage (210) sont montés pivotant suivant une première mobilité de pivotement et par rapport auquel un bras de finition (235) est monté pivotant suivant deux autres mobilités de pivotement, dans laquelle le bras de finition (235) porte ledit outil de gravure (280).

16. Machine de détourage (200) selon la revendication précédente, dans laquelle le bras de finition (235) porte au moins un autre outil compris dans la liste suivante : une meulette de polissage (241), une meulette de chanfreinage (251), un fraise (261), un foret de perçage (271).

17. Machine de détourage (200) selon l'une des revendications 15 et 16, dans laquelle le support (283) de l'outil de gravure (280) est monté fixe en rotation sur le bras de finition (235).

18. Machine de détourage (200) selon l'une des revendications 15 et 16, dans laquelle le bras de finition (235) porte un mandrin rotatif (270) pour foret de perçage (271) et dans laquelle le support (283) de l'outil de gravure (280) présente une partie de préhension (281A) montée de manière amovible dans ledit mandrin rotatif (270).

19. Machine de détourage (200) selon l'une des revendications 15 à 18, dans laquelle le premier moyen d'acquisition (300) comporte au moins un palpeur (302) qui est adapté à venir au contact de ladite face optique (11) de la lentille optique (1), qui est monté à translation suivant une autre mobilité de translation par rapport audit châssis (201), et qui porte un marqueur.

20. Machine de détourage (200) selon l'une des revendications 13 et 14, qui comporte un châssis (201) par rapport auquel lesdits moyens de blocage (210) sont montés pivotant suivant une première mobilité de pivotement, dans laquelle le premier moyen d'acquisition (300) comporte au moins un palpeur (302) qui est adapté à venir au contact de ladite face optique (11) de la lentille optique (1), qui est monté à translation suivant une autre mobilité de translation par rapport audit châssis (201), et qui porte ledit outil de gravure (280).

21. Machine de détourage (200) selon l'une des revendications 13 à 20, dans laquelle ledit outil de gravure (280) est équipé d'une jauge de contrainte adaptée à mesurer un effort relatif à la force exercée par l'outil de gravure (280) sur la lentille optique (1).

22. Machine de détourage (200) selon l'une des revendications 13 à 20, dans laquelle le support (283) de l'outil de gravure (280) est monté mobile en translation dans un fourreau (281) et dans laquelle il est prévu un moyen de rappel dudit support (283) en position déployée hors du fourreau (281).


**Patentansprüche**

1. Verfahren zur Bearbeitung einer Kontaktlinse (1) durch eine Fräsmaschine (200), umfassend:

    - einen Schritt des Feststellens der Kontaktlinse (1) zwischen zwei Spindeln (211) zum Einspannen und Drehantrieb der Kontaktlinse (1) wobei die zwei Spindeln (211) Feststellmitteln (210) der Fräsmaschine (200) angehören,
    - einen Schritt der Erfassung von geometrischen Merkmalen ($x_i$, $y_i$, $z_i$) zur Form mindestens einer der optischen Flächen (11) der Kontaktlinse (1),
    - einen Schritt der Ausarbeitung eines Frässollwerts (CONS1) der Kontaktlinse (1) in Abhängigkeit von den erfassten geometrischen Merkmalen ($x_i$, $y_i$, $z_i$), und
    - einen Schritt des Fräsens der Kontaktlinse (1) entlang einer gewünschten Kontur (2), während dessen ein Fräswerkzeug (220) der Fräsmaschine (200) in Bezug zu den Feststellmitteln (210) gemäß dem Frässollwert (CONS1) gesteuert wird,

    **dadurch gekennzeichnet, dass** es ferner umfasst:

    - einen Schritt der Ausarbeitung eines Ätzsollwerts (CONS2) der optischen Fläche (11) der Kontaktlinse (1) in Abhängigkeit von den erfassten geometrischen Merkmalen ($x_i$, $y_i$, $z_i$), und
    - einen Schritt des Ätzens der optischen Fläche (11) der Kontaktlinse (1) entlang einer Linie (3), die sich innerhalb der gewünschten Kontur (2) befindet, während dessen spitzes Ätzwerkzeug (280) der Fräsmaschine in Bezug zu den Feststellmitteln (210) gemäß dem Ätzsollwert (CONS2) derart gesteuert wird, dass seine Spitze (284) kontinuierlich gegen die optische Fläche (11) gleitet, um entlang der Linie (3) zu ätzen.

2. Bearbeitungsverfahren nach dem vorhergehenden Anspruch, bei dem während des Ätzschritts das Ätzwerkzeug (280) in Bezug zu den Feststellmitteln (210) derart gesteuert wird, dass es auf der optischen Fläche (11) einen Streifen erzeugt, der eine Breite und eine Tiefe zwischen 0,005 und 0,5 Millimeter aufweist.

3. Bearbeitungsverfahren nach einem der vorhergehenden Ansprüche, bei dem, wobei die Spitze (284) eine Umdrehungsachse (A9) aufweist, zu Beginn des Ätzschritts das Ätzwerkzeug (280) in Bezug zu den Feststellmitteln (210) derart gesteuert wird, dass sich die Umdrehungsachse (A9) orthogonal zu der Ebene anordnet, die die optische Fläche (11) tangiert und die durch den ursprünglichen Kontaktpunkt zwischen der Spitze (284) und der optischen Fläche (11) verläuft.

4. Bearbeitungsverfahren nach einem der vorhergehenden Ansprüche, bei dem, wobei die Fräsmaschine (200) ein Gestell (201) umfasst, in Bezug zu dem die Feststellmittel (210) entlang einer ersten Schwenkmobilität schwenkbar montiert sind, und in Bezug zu dem ein Fertigstellungsarm (235) schwenkbar entlang zweier weiterer Schwenkmobilitäten montiert ist, wobei der Fertigstellungsarm (235) das Ätzwerkzeug (280) während des Ätzschritts trägt, wobei das Ätzwerkzeug (280) in Bezug zum Fertigstellungsarm (235) drehfest gehalten wird.

5. Bearbeitungsverfahren nach einem der Ansprüche 1 bis 4, bei dem, wobei das Ätzwerkzeug (280) mit einem Dehnungsmessstreifen ausgestattet ist, der geeignet ist, eine relative Kraft zu der vom Ätzwerkzeug (280) auf die Kontaktlinse (1) ausgeübten Kraft zu messen, die Kraft erfasst wird, und das Ätzwerkzeug (280) in Bezug zu den Feststellmitteln (210) in Abhängigkeit von der erfassten Kraft gesteuert wird.

6. Bearbeitungsverfahren nach einem der Ansprüche 1 bis 4, bei dem, wobei das Ätzwerkzeug (280) einerseits eine Hülle (281), in der eine Stütze (283) der Spitze (284) in Translation beweglich montiert ist, und andererseits ein Rückstellmittel der Stütze (283) in die aus der Hülle (281) ausgefahrene Position umfasst, bei dem Ätzschritt das Ätzwerkzeug (280) in Bezug zu den Feststellmitteln (210) derart gesteuert wird, dass die Spitze (284) theoretisch in die Kontaktlinse (1) in eine Solltiefe (P) eindringt, die zumindest in Abhängigkeit vom Material der Kontaktlinse (1) bestimmt wird.

7. Bearbeitungsverfahren nach einem der vorhergehenden Ansprüche, bei dem bei dem Schritt der Ausarbeitung des Ätzsollwerts (CONS2) vorgesehen ist:

    - ein Erfassungsvorgang der Form und der Position mindestens einer Interferenzzone (410, 411, 412, 413, 414), wobei diese Interferenzzone (410, 411, 412, 413, 414) mindestens die Kontaktzone zwischen der optischen Fläche (11) und den Feststellmitteln (210) umfasst, und
- einen Vorgang der Erkundung innerhalb der gewünschten Kontur (2) mindestens einer geeigneten Zone (4), in der die Linie (3) auf Grund der Form und der Position jeder Interferenzzone (410, 411, 412, 413, 414) geätzt werden kann.

8. Bearbeitungsverfahren nach dem vorhergehenden Anspruch, bei dem bei dem Schritt der Ausarbeitung des Ätzsollwerts (CONS2) ein automatischer Positionierungsvorgang der Linie (3) innerhalb der geeigneten Zone (4) vorgesehen ist.

9. Bearbeitungsverfahren nach einem der vorhergehenden Ansprüche, bei dem bei dem Schritt der Ausarbeitung des Ätzsollwerts (CONS2) ein manueller Positionierungsvorgang der Linie (3) innerhalb der gewünschten Kontur (2) vorgesehen ist.

10. Bearbeitungsverfahren nach einem der vorhergehenden Ansprüche, bei dem, wobei die optische Fläche (11) der Kontaktlinse (1) eine Oberflächenbeschichtung aufweist, die Linie (3) in einer Schläfen- oder Nasenzone der optischen Fläche (11) angeordnet ist und einen Oberflächenabschnitt ohne Beschichtung bildet.

11. Bearbeitungsverfahren nach einem der vorhergehenden Ansprüche, bei dem ein späterer Schritt der Einfärbung des erhaltenen Streifens vorgesehen ist, während dessen ein Marker (310) der Fräsmaschine (200) in Bezug zu den Feststellmitteln (210) derart gesteuert wird, dass er innerhalb des Streifens gleitet.

12. Bearbeitungsverfahren nach einem der vorhergehenden Ansprüche, bei dem die Linie (3) einen Verfolgbarkeitscode der Kontaktlinse (1) bildet.

13. Maschine (200) zum Fräsen einer Kontaktlinse (1), umfassend:

- Mittel zum Feststellen (210) der Kontaktlinse (1), umfassend zwei Spindeln (211) zum Einspannen und Drehantrieb der Kontaktlinse (1),
- ein erstes Mittel zur Erfassung (300) von geometrischen Merkmalen $(x_i, y_i, z_i)$ zur Form mindestens einer der optischen Flächen (11) der Kontaktlinse (1), die in den Feststellmitteln (210) festgestellt ist,
- ein zweites Mittel zur Erfassung (100) eines Frässollwerts (CONS1) der Kontaktlinse (1),
- ein Fräswerkzeug (220), das geeignet ist, die Kontaktlinse (1) zu fräsen,
- ein Steuermittel (100), das geeignet ist, das Fräswerkzeug (220) in Bezug zu den Feststellmitteln (210) gemäß dem Frässollwert (CONS1) zu steuern,

**dadurch gekennzeichnet, dass** ein Ätzwerkzeug (280) vorgesehen ist, das eine abrasive Spitze (284) umfasst, die dazu vorgesehen ist, die optische Fläche (11) der Kontaktlinse (1) zu ätzen, und dass das zweite Erfassungsmittel (100) dazu vorgesehen ist, einen Ätzsollwert (CONS2) der optischen Fläche (11) der Kontaktlinse (1) zu erfassen, und dass das Steuermittel (100) geeignet ist, das Ätzwerkzeug (280) in Bezug zu den Feststellmitteln (210) gemäß dem Ätzsollwert (CONS2) derart zu steuern, dass die Spitze (284) gegen die optische Fläche (11) gleitet, um sie zu ätzen.

14. Fräsmaschine (200) nach dem vorhergehenden Anspruch, bei der das Ätzwerkzeugs (280) eine nicht abrasive Stütze (283) umfasst, an deren Ende die Spitze (284) befestigt ist, die aus einem anderen Material als die Spitze (284) hergestellt ist, und in der sich die Spitze (284) auf einer Länge unter 5 Millimeter erstreckt.

15. Fräsmaschine (200) nach einem der Ansprüche 13 und 14, umfassend ein Gestell (201), in Bezug zu dem die Feststellmittel (210) schwenkbar nach einer ersten Schwenkmobilität montiert sind, und in Bezug zu dem ein Fertigstellungsarm (235) schwenkbar nach zwei weiteren Schwenkmobilitäten montiert ist, wobei der Fertigstellungsarm (235) das Ätzwerkzeug (280) trägt.

16. Fräsmaschine (200) nach dem vorhergehenden Anspruch, bei der der Fertigstellungsarm (235) mindestens ein weiteres Werkzeug trägt, das in der folgenden Liste steht: Polierschleifer (241), Abfasungsschleifer (251), Fräse (261), Lochbohrer (271) .

17. Fräsmaschine (200) nach einem der Ansprüche 15 und 16, bei der die Stütze (283) des Ätzwerkzeugs (280) drehfest auf dem Fertigstellungsarm (235) montiert ist.

18. Fräsmaschine (200) nach einem der Ansprüche 15 und 16, bei der der Fertigstellungsarm (235) einen rotierenden Dorn (270) für einen Lochbohrer (271) trägt, und bei der die Stütze (283) des Ätzwerkzeugs (280) einen Greifabschnitt (281A) aufweist, der abnehmbar im rotierenden Dorn (270) montiert ist.

19. Fräsmaschine (200) nach einem der Ansprüche 15 bis 18, bei der das erste Erfassungsmittel (300) mindestens einen Sensor (302) umfasst, der dazu vorgesehen ist, mit der optischen Fläche (11) der Kontaktlinse (1) in Kontakt zu kommen, der in Translation nach einer anderen Translationsmobilität in Bezug zum Gestell (201) montiert ist und der einen Marker trägt.

20. Fräsmaschine (200) nach einem der Ansprüche 13 und 14, umfassend ein Gestell (201), in Bezug zu dem die Feststellmittel (210) schwenkbar nach einer ersten Schwenkmobilität montiert sind, bei der das erste Erfassungsmittel (300) mindestens einen Sensor (302) umfasst, der geeignet ist, mit der optischen Fläche (11) der Kontaktlinse (1) in Kontakt zu kommen, der in Translation nach einer anderen Translationsmobilität in Bezug zum Gestell (201) montiert ist, und der das Ätzwerkzeug (280) trägt.

21. Fräsmaschine (200) nach einem der Ansprüche 13 bis 20, bei der das Ätzwerkzeug (280) mit einem Dehnungsmessstreifen ausgestattet ist, der geeignet ist, eine relative Kraft zu der von dem Ätzwerkzeug (280) auf die Kontaktlinse (1) ausgeübten Kraft zu messen.

22. Fräsmaschine (200) nach einem der Ansprüche 13 bis 20, bei der die Stütze (283) des Ätzwerkzeugs (280) in Translation beweglich in einer Hülle (281) montiert ist, und bei der ein Rückstellmittel der Stütze (283) in die aus der Hülle (281) ausgefahrene Position vorgesehen ist.

**Claims**

1. A method for machining an optical lens (1) by way of a trimming machine (200), comprising:

   - a step of immobilizing said optical lens (1) between two shafts (211) adapted for clamping the optical lens (1) and driving it in rotation, said two shafts (211) belonging to immobilizing means (210) of said trimming machine (200),
   - a step of acquiring geometric characteristics $(x_i, y_i, z_i)$ relating to the shape of at least one of the optical faces (11) of the optical lens (1),
   - a step of defining trimming instructions (CONS1) for the optical lens (1) as a function of the geometric characteristics $(x_i, y_i, z_i)$ acquired, and
   - a step of trimming the optical lens (1) around a desired outline (2), during which a trimming tool (220) of the trimming machine (200) is driven relative to said immobilizing means (210) according to said trimming instructions (CONS1),

   **characterized in that** it also comprises:

   - a step of defining etching instructions (CONS2) for said optical face (11) of the optical lens (1) as a function of the geometric characteristics $(x_i, y_i, z_i)$ acquired, and
   - a step of etching said optical face (11) of the optical lens (1) along a line (3) situated inside said desired outline (2), during which a sharp etching tool (280) of said trimming machine is driven relative to said immobilizing means (210) according to said etching instructions (CONS2) in such a way that its point (284) slides continuously on said optical face (11) in order to scratch it along said line (3).

2. The machining method as claimed in the preceding claim, wherein, during the etching step, said etching tool (280) is driven relative to said immobilizing means (210) in such a way that it creates a scratch on said optical face (11), said scratch having a width and a depth of between 0.005 and 0.5 millimeter.

3. The machining method as claimed in either of the preceding claims, wherein, since said point (284) has an axis of revolution (A9), starting from the etching step, said etching tool (280) is driven relative to said immobilizing means (210) in such a way that said axis of revolution (A9) is positioned orthogonally to the plane which is tangential to said optical face (11) and which passes through the initial point of contact between said point (284) and said optical face (11).

4. The machining method as claimed in one of the preceding claims, wherein, since said trimming machine (200) has a chassis (201) with respect to which said immobilizing means (210) are mounted so as to pivot with a first pivoting mobility and with respect to which a finishing arm (235) is mounted so as to pivot with two other pivoting mobilities, the finishing arm (235) carrying said etching tool (280), during the etching step, said etching tool (280) is kept fixed in terms of rotation with respect to said finishing arm (235).

5. The machining method as claimed in one of claims 1 to 4, wherein, since said etching tool (280) is equipped with a strain gage suitable for measuring a stress relating to the force exerted by the etching tool (280) on the optical lens (1), during the etching step, said stress is acquired and said etching tool (280) is driven relative to said immobilizing means (210) as a function of the stress acquired.

6. The machining method as claimed in one of claims 1 to 4, wherein, since said etching tool (280) comprises a sheath (281) in which a mount (283) for said point (284) is mounted so as to be able to move in translation, and also a return means for returning said mount (283) into the position extended out of the sheath (281), during the etching step, said etching tool (280) is driven relative to said immobilizing means (210) in such a way that said point (284) is pressed theoretically into the optical lens (1) to a setpoint depth (P) determined as a function at least of the material of the optical lens (1).

**7.** The machining method as claimed in one of the preceding claims, wherein, during the step of defining the etching instructions (CONS2), the following are provided:

- an operation of acquiring the shape and the position of at least one interference zone (410, 411, 412, 413, 414), this interference zone (410, 411, 412, 413, 414) comprising at least the zone of contact between said optical face (11) and said immobilizing means (210), and
- an operation of identifying, inside the desired outline (2), at least one suitable zone (4) in which the line (3) can be etched, taking the shape and the position of each interference zone (410, 411, 412, 413, 414) into account.

**8.** The machining method as claimed in the preceding claim, wherein, during the step of defining the etching instructions (CONS2), provision is made of an automatic operation of positioning said line (3) inside said suitable zone (4).

**9.** The machining method as claimed in one of the preceding claims, wherein, during the step of defining the etching instructions (CONS2), provision is made of a manual operation of positioning said line (3) inside the desired outline (2).

**10.** The machining method as claimed in one of the preceding claims, wherein, since said optical face (11) of the optical lens (1) has a surface coating, said line (3) is situated in a temporal or nasal zone of said optical face (11) and forms a surface portion that is free of coating.

**11.** The machining method as claimed in one of the preceding claims, wherein provision is made of a subsequent step of coloring the scratch obtained, during which a marker (310) of said trimming machine (200) is driven relative to said immobilizing means (210) in such a way that it slides inside said scratch.

**12.** The machining method as claimed in one of the preceding claims, wherein said line (3) forms a tracking code for the optical lens (1).

**13.** A machine (200) for trimming an optical lens (1), comprising:

- means (210) for immobilizing the optical lens (1) that comprises two shafts (211) adapted for clamping the optical lens (1) and driving it in rotation,,
- a first acquisition means (300) for acquiring geometric characteristics $(x_i, y_i, z_i)$ relating to the shape of at least one of the optical faces (11) of the optical lens (1) immobilized in said immobilizing means (210),
- a second acquisition means (100) for acquiring trimming instructions (CONS1) for the optical lens (1),
- a trimming tool (220) suitable for trimming the optical lens (1),
- a driving means (100) suitable for driving said trimming tool (220) relative to said immobilizing means (210) according to said trimming instructions (CONS1),

**characterized in that** provision is made of an etching tool (280) which comprises an abrasive point (284) suitable for scoring said optical face (11) of said optical lens (1), **in that** said second acquisition means (100) is intended to acquire etching instructions (CONS2) for said optical face (11) of the optical lens (1), and **in that** said driving means (100) is intended to drive said etching tool (280) relative to said immobilizing means (210) according to said etching instructions (CONS2) in such a way that said point (284) slides on said optical face (11) in order to scratch it.

**14.** The trimming machine (200) as claimed in the preceding claim, wherein said etching tool (280) comprises a nonabrasive mount (283), at the end of which said point (284) is fixed, which is made of a different material than the material of said point (284), and wherein said point (284) extends along a length of less than 5 millimeters.

**15.** The trimming machine (200) as claimed in either of claims 13 and 14, which comprises a chassis (201) with respect to which said immobilizing means (210) are mounted so as to pivot with a first pivoting mobility and with respect to which a finishing arm (235) is mounted so as to pivot with two other pivoting mobilities, wherein the finishing arm (235) carries said etching tool (280).

**16.** The trimming machine (200) as claimed in the preceding claim, wherein the finishing arm (235) carries at least one other tool chosen from the following list: a mini polishing wheel (241), a mini chamfering wheel (251), a milling cutter (261), a drill bit (271).

**17.** The trimming machine (200) as claimed in either of claims 15 and 16, wherein the mount (283) for the etching tool (280) is mounted on the finishing arm (235) in a fixed manner in terms of rotation.

**18.** The trimming machine (200) as claimed in either of claims 15 and 16, wherein the finishing arm (235) carries a rotary chuck (270) for a drill bit (271) and wherein the mount (283) for the etching tool (280) has a gripping part (281A) mounted removably in said rotary chuck (270).

19. The trimming machine (200) as claimed in one of claims 15 to 18, wherein the first acquisition means (300) comprises at least one sensor (302) which is intended to come into contact with said optical face (11) of the optical lens (1), which is mounted so as to move in translation with another translational mobility with respect to said chassis (201), and which carries a marker.

20. The trimming machine (200) as claimed in either of claims 13 and 14, which comprises a chassis (201) with respect to which said immobilizing means (210) are mounted so as to pivot with a first pivoting mobility, wherein the first acquisition means (300) comprises at least one sensor (302) which is intended to come into contact with said optical face (11) of the optical lens (1), which is mounted so as to move in translation with another translational mobility with respect to said chassis (201), and which carries said etching tool (280).

21. The trimming machine (200) as claimed in one of claims 13 to 20, wherein said etching tool (280) is equipped with a strain gage suitable for measuring a stress relating to the force exerted by the etching tool (280) on the optical lens (1).

22. The trimming machine (200) as claimed in one of claims 13 to 20, wherein the mount (283) for the etching tool (280) is mounted so as to be able to move in translation in a sheath (281), and wherein provision is made of a return means for returning said mount (283) into the position extended out of the sheath (281).

**Fig.1**

**Fig.2**

**Fig.3**

Fig.4

Fig.5

Fig.6

**Fig.7**

**Fig.8**

**Fig.9**

**Fig.10**

**Fig.11**

**Fig.12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007141402 A
- WO 2008043910 A
- EP 2306236 A